(19)

Europäisches
Patentamt
European
Patent Office
Office européen
des brevets

(11) **EP 4 624 978 A1**

(12) **EUROPEAN PATENT APPLICATION**

(43) Date of publication:
**01.10.2025 Bulletin 2025/40**

(21) Application number: **24166870.6**

(22) Date of filing: **27.03.2024**

(51) International Patent Classification (IPC):
**G01S 7/35** (2006.01)  **G01S 13/42** (2006.01)
**G01S 13/58** (2006.01)  **G01S 13/931** (2020.01)

(52) Cooperative Patent Classification (CPC):
**G01S 13/931; G01S 7/356; G01S 13/42; G01S 13/584**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **VOLKSWAGEN AG**
  **38440 Wolfsburg (DE)**
• **Fraunhofer-Gesellschaft zur Förderung der angewandten Forschung e.V.**
  **80686 München (DE)**

(72) Inventors:
• **Gisder, Thomas**
  **38446 Wolfsburg (DE)**
• **Kurz, Heiko Gustav**
  **30177 Hannover (DE)**
• **Meinecke, Marc-Michael**
  **38524 Sassenburg (DE)**
• **Simoni, Renato**
  **53111 Bonn (DE)**
• **González-Huici, María Antonia**
  **53123 Bonn (DE)**
• **Mateos-Nunez, David**
  **38806 Alcala de Henares (ES)**

(54) **A METHOD FOR DETERMINING A TARGET INFORMATION OF A RADAR TARGET BASED ON AN INCOHERENT SIGNAL PROCESSING CHAIN, RADAR SYSTEM AND MOTOR VEHICLE**

(57)    A method for determining a target information of a radar target based on an incoherent signal processing chain, radar system and motor vehicle

The present invention relates to a method for determining one target information (43) of one radar target (15) of a radar system (3), wherein radar system (3) comprising transmitting antennas (9) and receiving antennas (10), wherein

- each transmitting antenna transmits a radar signal (13) into an environment (14) in successive transmission operation,
- after each transmitting operation, receiving antennas (10) receive received signals (16) based on the transmitted radar signal (13),
- the received signals (16) are sorted,
- for each antenna (9) a data structure (26) is generated based on the sorted signals (16),
- for each data structure (26) an individual range-Doppler-map is generated based on the signals (16),
- the range-Doppler-maps of the date structures (26) are averaged, and
- the target information (43) is determined based of the averaged range-Doppler-map.

Furthermore the present invention relates to a radar system (3) and a motor vehicle (21).

Fig. 13

## Description

The present invention relates to a method for A method for determining at least one target information of at least one radar target of a radar system, wherein the radar system comprising at least one antenna array, which comprising multiple transmitting antennas and multiple receiving antennas.

The present invention further relates to a radar system and to a motor vehicle.

The document EP 4 137 840 A1 describes a method for determining a relative distance r between a first antenna element and a second antenna element each being part of an antenna array. A first radar signal, with a first frequency, is transmitted by the first antenna element and a first receive signal, related to the first radar signal, is received by the second antenna element. The method further comprises demodulating the first receive signal based on the first radar signal to obtain a first intermediate signal having a first phase.

The document EP 3 588 128 A describes a method for detection and height and azimuth estimation of objects in a scene by radar processing, radar signals are emitted to the scene and radar signals reflected from the scene are received using at least one multi-channel radar sensor, said radar sensor comprising a two-dimensional array of sensor elements with spatial diversity in horizontal and vertical axes. Measurement signals of the at least one radar sensor are processed to detect objects in the scene and a height and azimuth estimation of one or several detected objects is performed using compressed sensing.

The Document US 2022 / 0 260 699 A1 describes a techniques and systems directed at slow-time modulation for multiple radar channels. A set of transmit channels are modulated using code sequences to phase-modulate transmission signals. A second set of transmit channels are modulated using the same codes for phase modulation as well as using a frequency phase shift. Demodulation is achieved by multiplying received signals by the code sequences. Fast Fourier transforms (FFT) are applied to the received signals to generate a range-Doppler map for each receive channel.

It is an object of the present invention to increase the signal processing time for determining target information of radar targets.

This object is solved by the respective subject matter of the independent claims. Advantageous developments and preferred embodiments are the subject matter of the dependent claims.

According to an (first) aspect of the invention, a method for determining at least one target information of at least one radar target of a radar system is provided, wherein the radar system comprising at least one antenna array, which comprising multiple transmitting antennas and multiple receiving antennas is provided, wherein each transmitting antenna of the multiple transmitting antennas transmits a radar signal into an environment of the radar system in successive transmission operation. After each transmitting operation, at least some of the plurality of receiving antennas receive reflected received signals from the radar target in the environment based on the transmitted radar signal of the respective transmitting operation The received signals are sorted on the basis of the transmitting antennas on which the individual received signals are based, and for each transmitting antenna a data structure is generated based on the sorted received signals, wherein each data structure comprised the received signals which based on the transmitting antenna on which the individual data structure is generated, wherein for each generated data structure an individual range-Doppler-map is generated based on the individual received signals of each data structure. The range-Doppler-maps of the date structures are averaged, and the target information of the radar target is determined based of the averaged range-Doppler-map of the date structures.

The proposed method has the advantage that the signal processing time and/or the signal processing procedure of determining target information of at least one radar target of a radar system increase. In particular, the signal processing may be done incoherent. This is advantageously for distributed antennas of a radar system.

The proposed method may be advantageously used to improve the environmental detection of vehicles. When using a radar system in the automotive sector, for example, accurate, improved and yet simpler detection of objects is required. Here, increased detection performance and reduced side lobe ambiguity in conjunction with a high angular resolution of the radar system is important, for example, for lane guidance, for carrying out an overtaking maneuver or for obstacle detection. This is where the present invention advantageously comes into play and may provide a remedy in this respect.

Also the proposed method may be used to modified a radar system in this way, that for the radar system a high angular resolution like at lidar system is available. Another advantage of the proposed method is to reduce the number of transmitting antennas and receiving antennas of the radar system.

According to the proposed method an incoherent processing of data of distributed apertures, radar networks, monostatic antennas, bistatic antennas, non-uniform antennas, sparse antennas, non-equidistant antenna spacing and with curved spatial dimension in 2D or 3D, especially in dynamic applications, such as automobiles, trains, airplanes and ships is possible.

Especially, the proposed method solve the problem of large antenna arrays exhibit due to the geometrical antenna placement a paralaxis effect which results in ambiguous range with respect to the path sending antenna - target - receiving antenna.

Due to the sparse, non-uniform and large geometry of the antenna array, conventional signal processing algorithms fail to compensate phase shifts and do not result in an unambiguous angular measurement. Therefore the proposed method may be used to solve this problem.

The radar system may comprising one antenna array or several antenna arrays. The transmitting antennas may be understood such as transmitter to send out radar signals in the environment. The receiving antennas may be understood such as receiver to receive signals, which are reflected on an object, especially a target, in the environment. In particular, the multiple transmitting antennas and the multiple receiving antennas may be distributed arranged on the antenna array.

An antenna array, which may also be referred to as an aperture or antenna aperture or array aperture, may be a surface or a predefined area on which or within which several or a large number of individual antennas or antenna elements are arranged. In particular, an antenna array may be used to both transmit and receive signals.

At least one transmit signal or several transmit signals may be emitted in the environment of the radar system. If at least one of these transmitted signals, such as the at least one transmitted signal, hits a radar target, such as an object in the vicinity, this signal is reflected accordingly and reflected back in the direction of the radar system. Therefor every transmitting antenna of the several transmitting antenna transmit an individual radar signal in successive transmission operation. In other words, in each transmission operation only one transmitting antenna is sending out a radar signal. After each transmission operation or transmission round the receiving antennas received the reflected received signals.

In other words, a variation of transmitting antennas in successive MIMO cycles is applied. In each MIMO cycle one transmitting antenna is transmit a radar signal.

The data structures may be generated by an electronic evaluation unit of the radar system. On Basis of the received signals the data structures, especially data packages, are generated by the evaluation unit. The evaluation unit is further designed to perform different signal processing process of the radar system.

In particular, all received signals of all transmission operations are sorted by the respected transmitting antenna. In other words, all received signals, which are based on the same transmitting antenna, may be selected to the data structure of the respected transmitting antenna.

With the evaluation unit may estimate the range-Doppler- map or a range-Doppler-spectrum or a range-Doppler-matrix for each data structure.

For each data structure an averaging may be carried out based on the receive signals of the respective data structure.

In particular, in a processing step all range-Doppler-maps may be averaged. As a result of these, the averaged range-Doppler-map may be estimate for the determining of the target information.

Especially a range-Doppler-map shows how far away the targets are and how quickly they are approaching or receding.

In one embodiment, for each transmission operation the one of the plurality of the transmitting antennas which, in particular only, transmits a radar signal is defined in any order, in particular the one of the plurality of the transmitting antennas which, in particular only, transmits a radar signal in each transmission operation is randomized default. Through this, the determining of the target information of the radar target may be carried out more efficient and/or faster. In other words, the transmitting antenna of each transmission operation which only transmit a radar signal may be defined random.

In one embodiment, the received signals which are received after each transmission operation are mixed with the radar signal of the transmitting antenna of the individual transmission operation. In other words, each received signal may be mixed with the radar signal of the last active or of the last transmitting antenna. Especially the receive signals may be expanded in their information content. This is advantageously for the Selection of the received signals and the Generation of the range-Doppler-maps.

In another embodiment, at each data structure a zero-padding-method is applied, wherein at memory positions of a respective data structure, which characterizes a transmission time at which another transmitting antenna than the transmitting antenna relating to the respective data structure has transmitted, is filled with zeros. In other words, each data structure of a transmitting antenna may include data of receive signals which do not correspond to the respective data structure. Therefore, the data of a memory position of thus "false data" are deleted. In other words, keep the receive signals or the data of the receive signals which has been sent from the same transmitting antenna. The others may delete and the memory location where data has been deleted are set to zero. This means that the data structure only contains the relevant data or receive signals. Therefore, the processing time may be faster.

In another embodiment, at each data structure a fast fourier transformation is applied based along pulse direction of the received signals of each data structure. Based on the information from the received signals, for example, a distance or range determination may be carried out for each data structure, in particular for the signals of each data structure, and thus a distance determination based on the Doppler effect. In order to be able to perform a particularly efficient calculation here, a corresponding mathematical transformation, such as the fast Fourier transformation, may be used in particular. Other mathematical operations or transformations may also be used.

In another embodiment, an average data structure is generated based on the averaged range-Doppler-maps of the data structures, wherein the averaged data structure will be considered at the determining of the target information of the radar target. In other words, all samples of all receiving antennas, in particular of all data structures, may be average. The average data structure may be called as a master data structure which may be used for determining the target information. Therefore, all range-Doppler-maps of all data structures may be averaged along the receive antenna. The generated average data structure brings the advantage that only one combined data structure is used to estimate target information of radar targets. Because of these, the processing will be increased faster.

In another embodiment, a target detection of the radar target is applied based on a range-Doppler-map of each data structure. Through this, on basis of each range-Doppler-map the the presence of the radar target or other object in the environment may be check. It may be try based on each data structure to detect the radar target. Therefore, more information of the radar target may be generated and the determining of the target information of the radar target may be more efficient.

A target range and/or a target speed of the radar target may be estimate based on the target detection.

In another embodiment, the received signals of each data structure are incoherent combined for determining the range-Doppler-map of each data structure. Therefore the less antennas of an antenna array are needed and the processing time may be increased faster. By combining the received signals incoherent, the individual antennas of the antenna array may be arranged in any order.

In another embodiment, for each range-Doppler-map of the data structures an individual target signal relating to the radar target is generated based on each range-Doppler-map. In other words, a local aperture signal, also called "snapshot", is indexed by each range-Doppler-map, also called range-Doppler-cell. The target signals may be used for angel estimation of the radar target.

In another embodiment, for each range-Doppler-map a Doppler compensation is applied based on a Doppler compensation filter which is based on the individual target signal. Based on the Doppler compensation filter each target signal may be compensated. The Doppler compensation filter may be generated for each data structure individuality.

In another embodiment, he target information of the radar target is determined based on an orthogonal matching pursuit algorithm or a compressive sensing algorithm. Thus, with the help of the range-Doppler-maps, an approximation algorithm, in particular a sparse approximation algorithm, may be used to determine the corresponding target information or several target information. Therefore, an accurate angle target information may be estimate.

In particular the compensated target signals or compensated local aperture signals may be used as input for the orthogonal matching pursuit algorithm or a compressive sensing algorithm.

In another embodiment, with the target information an angle and/or a direction to the radar target is provided. In other words, the target information may be used in particular to estimate an angle in order to be able to determine a corresponding angle with respect to the radar target relative to the radar system and/or a direction of the radar target. This is particularly relevant for detecting the surroundings of a vehicle.

According to an (second) aspect of the invention, a Radar system is provided. The radar system comprising at least one antenna array, which comprised multiple transmitting antennas and multiple receiving antennas, and an electronic evaluation unit, wherein the radar system is designed to carry out a method according to the preceding (first) aspect or to one of the embodiments. In particular, the method described above may be carried out with the radar system just mentioned.

The radar system is, in particular, an electronic radar device or radar device with which radar targets in an environment may be detected or recorded. In particular, the radar system may have several antenna arrays, which in turn may be referred to as an antenna array. Thus, the radar system may have a plurality of antenna arrays arranged in a distributed manner, which in turn may each have several transmitting elements and receiving elements. In this way, the proposed radar system may be used to detect a surrounding area, in particular 360 degrees.

The electronic evaluation unit may be an electronic computing system. In particular, the electronic evaluation unit may be designed as a distributed system, whereby at least part of the evaluation unit may be arranged in a respective antenna array in order to carry out corresponding pre-processing. The electronic evaluation unit may also be designed as a central system, which is linked or coupled to the respective antenna arrays in terms of communication or data technology in order to be able to carry out a corresponding evaluation of the target information.

According to an (third) aspect of the invention, a Motor vehicle which comprising a radar system according to the (second) aspect is provided.

In particular, the aforementioned radar system may be integrated or installed in the aforementioned vehicle. This means that the aforementioned radar system may be used to detect the vehicle's surroundings. This may be used in particular advantageously for driver assistance systems or autonomous systems of the vehicle.

In one embodiment of the (third) aspect, the transmitted antennas and the receiving antennas of the antenna array are arranged at a distance from each other on the motor vehicle.

In particular, the antennas of the antenna array of the radar system are arranged at a distance from one another, so that a large area may be covered accordingly with the aid of fewer antenna array. With the method according to the previous aspect of the invention, radar information may in turn be effectively determined even if the antenna array of the radar system have uneven, difficult and/or non-equidistant antenna spacings from one another. This is particularly advantageous for the use of the radar system in the automotive sector, since antenna arrays may thus be arranged in a wide variety of areas or positions in and/or on the motor vehicle in order to be able to perform, in particular, 360-degree detection of the area surrounding the motor vehicle.

According to an independent aspect of the invention, a method for determining at least one target information of at least one radar target of a radar system, wherein the radar system comprising at least one antenna array, which comprising multiple transmitting antennas and multiple receiving antennas, is provided. Here may be done a coherent signal processing according to the following steps:

- each transmitting antenna of the multiple transmitting antennas transmits a radar signal into an environment of the radar system in successive transmission operation,
- after each transmitting operation, at least some of the plurality of receiving antennas receive reflected received signals from the radar target in the environment based on the transmitted radar signal of the respective transmitting operation,
- multiple hypothesis of target angles with regards to the radar target are specified,
- for each hypothesis of a target angle a data structure is generated based on the received signals, wherein each data structure comprised the received signals which correspond to the hypothesis of the target of the respective data structure,
- for each generated data structure an individual range-Doppler-map is generated based on the individual received signals of each data structure, and
- the target information of the radar target is determined based on the range-Doppler-maps of the date structures.

Advantageous embodiments of one aspect may be regarded as advantageous embodiments of the other aspects or of all aspects. This also applies vice versa.

In particular, the radar system and/or the motor vehicle has (technical) means for carrying out or being able to carry out the method.

The invention also includes further embodiments of the radar system and of the motor vehicle according to the invention, which have features as already described in connection with the further embodiments of the method according to the invention. For this reason, the corresponding further embodiments of the radar system and of the motor vehicle according to the invention are not described again here.

The invention also comprises the combinations of the features of the embodiments described.

The invention also comprises the combinations of the features of the different embodiments.

In the following an exemplary implementation of the invention is described. The figures show:

Fig. 1    shows a schematic view of a reception signal of a conventional radar system of the state of the art;
Fig. 2    shows a schematic transmitter-receiver structure of a radar system;
Fig. 3    shows exemplary how to calculate a range Doppler of constantly moving target;
Fig. 4    shows an exemplary receiving data structure;
Fig. 5    shows a schematic motor vehicle, which comprise the radar system of Fig.2;
Fig. 6    shows an example of a signal transmission based on a Multiple-Input-Multiple-Output-(M I MO)-method;
Fig. 7    shows exemplary a MIMO chirp sequence;
Fig. 8    shows an exemplary data structure, which may contains the information of the MIMO chirp sequence;
Fig. 9    shows exemplary another MIMO chirp sequence;
Fig. 10   shows an exemplary data structure, which may contains the information of the MIMO chirp sequence of Fig. 9;
Fig. 11   shows exemplary data structures for each transmitting antenna;
Fig. 12   shows exemplary that for each generated data structure an individual range-Doppler-map may be generated based on the individual received signals of each data structure;
Fig. 13   shows how an averaged data structure is generated based on the averaged range-Doppler-maps of the data structures;
Fig. 14   shows an exemplary result of Fig. 13;
Fig. 15   shows an exemplary range matrix, which may be a data structure;
Fig. 16   shows for example a number of different range matrices of individual MIMO sequences;
Fig. 17   shows a schematic field of view an antenna. Therefor a hypothesis model $p_H$ may be used to estimate an angle.
Fig. 18   shows an exemplary construction of an aperture hypothesis;
Fig. 19   shows an expended hypothesis model;
Fig. 20   shows exemplary an aperture hypothesis based on the expended hypothesis model of Fig. 19;
Fig. 21   shows an exemplary control flow how to estimated angle in azimuth and elevation;

Fig. 22      shows schematic a definition of compressed sensing for angel estimation; and

Fig. 23      shows schematic a process flow how to the Calculation of a direction of arrival may be done.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment may also be supplemented by further features of the invention already described.

In the figures identical reference signs indicate elements that provide the same function.

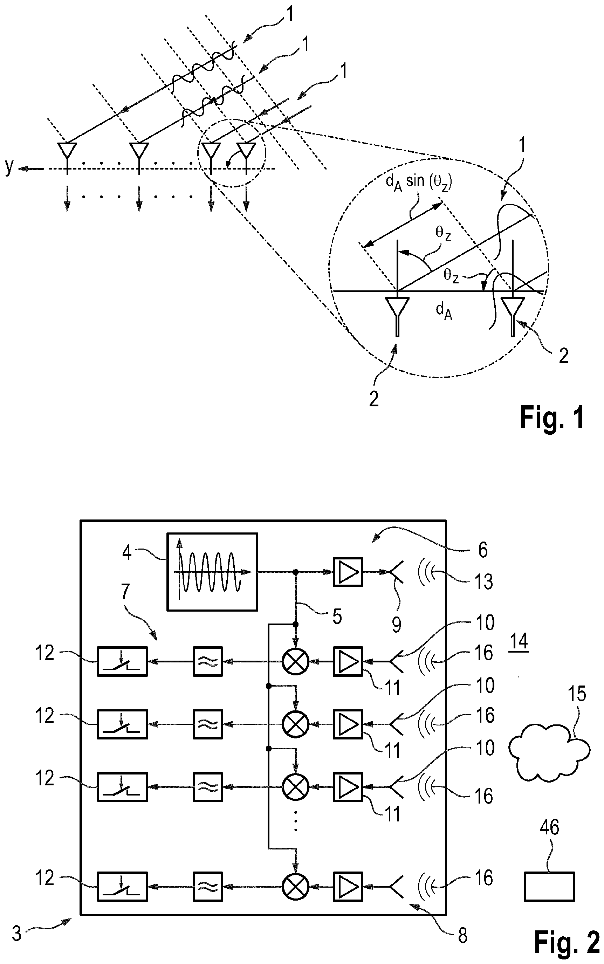

Fig. 1 shows a schematic view of a reception signal 1 of a conventional radar system of the state of the art. This radar system comprises at least one or more uniform linear antennas 2. There may be a spatial antenna distance $d_A$, between two uniform linear antennas 2. There may be an incidence angel $\theta_z$ at each of the uniform linear antennas 2. Especially an angle estimation may be bone based on the above described information. Therefor an angel depended phasor may be calculated with the following equation,

$$s_B(n_c, l_c, m) \approx \exp\left( -j2\pi \frac{d_A}{\lambda} \sin(\theta_z)\, m \right)$$

wherein m shows an antenna index, $n_c$ an constant sample index and $l_c$ a constant chirp index.

Fig. 2 shows a schematic transmitter-receiver structure of a radar system 3. An optical signal 5 may be generate with a waveform generator 4. This optical signal 5 may be send by optical wires to a transmitter 6 and/or to at least one receiver 7.

The radar system may contains an electronic evaluation unit 46 to process information and/or data. The electronic evaluation unit 46 may be formed as an electronic evaluation device or as an electronic evaluation system or as a computing device.

The transmitter 6 and the at least one receiver 7 may be part of an antenna array 8 of the radar system 2. The antenna array 8 may be comprise multiple transmitting antennas 9, which may be arranged on the transmitter 7. The antenna array 8 may be comprise also multiple receiving antennas 10, which may be arranged on the at least one receiver 7. The receiver 7 or all of these receivers may be comprise a low noise amplifier 11 and an inphase channel 12 for signal processing.

For example each transmitting antenna of the multiple transmitting antennas 9 may transmit a radar signal 13 into an environment 14 of the radar system 3 in successive transmission operation. After each transmitting operation, at least some of the plurality of receiving antennas 10 may receive reflected received signals 16 from a radar target 15 in the environment 14 based on the transmitted radar signal 13 of the respective transmitting operation.

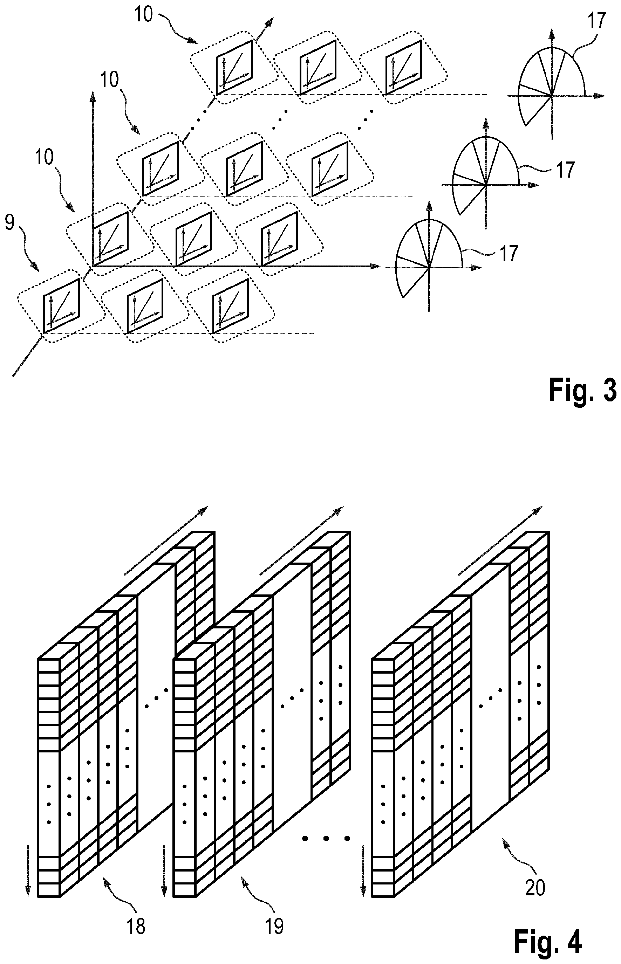

Fig. 3 shows exemplary how to calculate a range Doppler of constantly moving target. This moving target may be moves towards an antenna boresight direction. The calculation may be done in a far field model.

Here may be transmit radar signals 13 in different transmission operations with the transmitting antennas 9. In this example, a constant phase shift with each new transmitted pulse or radar signal 13 is present. After each transmission operation the phase shift 17 is constant.

Fig. 4 shows a exemplary receiving data structure. A linear phase progression for a moving target along a pulse sequence may be done. For each receiving antenna 10 a own data structure 18, 19, 20 may be generate. The advantage of this is that each receiving antenna 10 allows the calculation of its own range-Doppler-matrix. As Example, a constantly moving target in the same range gate shows a coherent linear phase progression between all receiving antennas 10.

Therefor a constant range signal may be calculated with the following equation:

$$S_B(u_c, m, k) = S_B(u_c, k) \times \exp\left( j2\pi f_D m\, T_{chirp} \right)$$

Particularly a Doppler depended phase may be calculated with the following equation:

$$\varphi\left( S_B(u_c, m, K) \right) = mx \qquad x = 2\pi f_D T_{chirp}$$

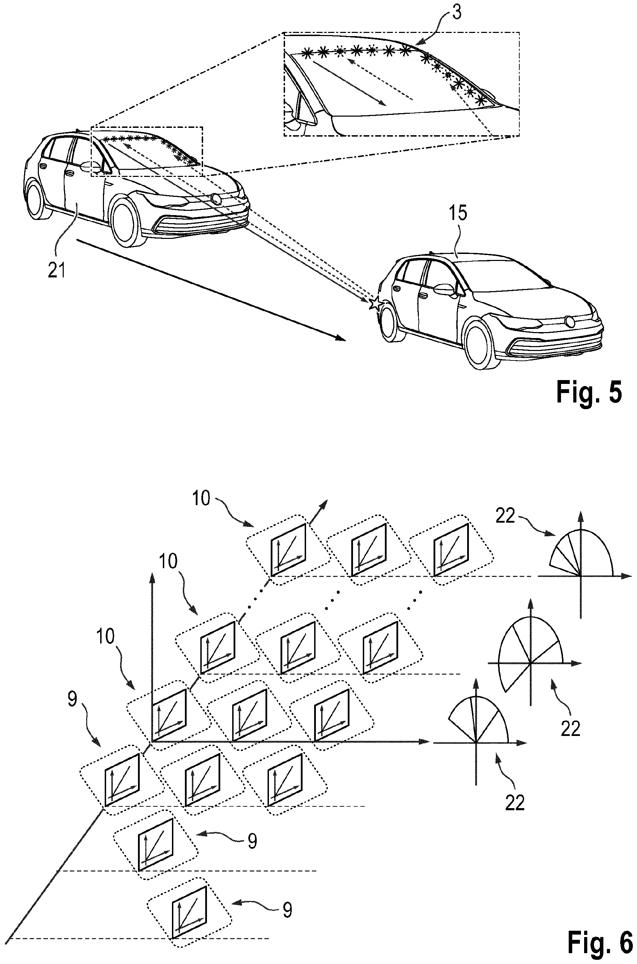

Fig. 5 shows a schematic vehicle 21, which comprise especially the radar system 3. In front of the motor vehicle 21 an other vehicle, like the radar target 15 is moving.

Particularly the transmitted antennas 9 and the receiving antennas 10 of an antenna array may be arranged at a distance from each other on the motor vehicle 21.

Particularly a signal model for a radar antenna in a large array may be calculated with the following equation:

$$s(n, m, k, l) = \sum_{i=0}^{I-1} \frac{\overbrace{\exp\left(2\pi j \frac{B}{T_{chirp}c_0}\left(2v_{t,i}T_{RRI}m + d_{t,i}(k,l)nT_s\right)\right)}^{\text{Range Doppler Coupling}} \times}{\underbrace{\exp\left(\frac{2\pi}{\lambda}j\left(2v_{t,i}T_{RRI}m + d_{t,i}(k,l)\right)\right)}_{\text{Distance and velocity dependend phase term}}}$$

Wherein n shows a sample index, m shows a chirp or pulse index, k shows a receiving antenna index and l shows a transmission antenna index. Furthermore shows the parameter i a target index, $d_t(k,l)$ a two way target distance and $T_{RRI}$ a ramp-repetition-interval.

Fig. 6 shows an example of a signal transmission based on a Multiple-Input-Multiple-Output-(MIMO)-method. At this each transmitting antenna of the multiple transmitting antennas 9 transmits a radar signal 13 into the environment 14 of the radar system 3 in successive transmission operation. After each transmission operation, at least some of the plurality of receiving antennas 10 receive reflected received signals 16 from the radar target 15 in the environment 14 based on the transmitted radar signal 13 of the respective transmitting operation.

Especially for each transmission operation the one of the plurality of the transmitting antennas 9 which transmits a radar signal 13 may be defined in any order, in particular the one of the plurality of the transmitting antennas 9 which transmits a radar signal 13 in each transmission operation is randomized default. The received signals 16 which may be received after each transmission operation may be mixed with the radar signal 13 of the transmitting antenna 9 of the individual transmission operation.

It is assumed here that a target is constantly moving. This moving target may be moves towards an antenna boresight direction. The calculation may be done in a far field model. The pulse sequence may be radiated from different transmitting antennas.

However, this is where the problem lies, that spatial distance of varying transmitters causes different distance dependent phase shifts 22. The consequence of this is that a coherent integration of individual range-Doppler-matrices is not possible.

Due to the sparse, non-uniform and large geometry of the antenna array, conventional signal processing algorithms fail to compensate phase shifts and do not result in an unambiguous angular measurement. Therefore, novel approaches are needed. This is where the present invention is advantageously used.

Maybe a two-step approach may be done. First received chirps of equal transmit antenna during one frame. And second a Doppler compensation of identified target may be done.

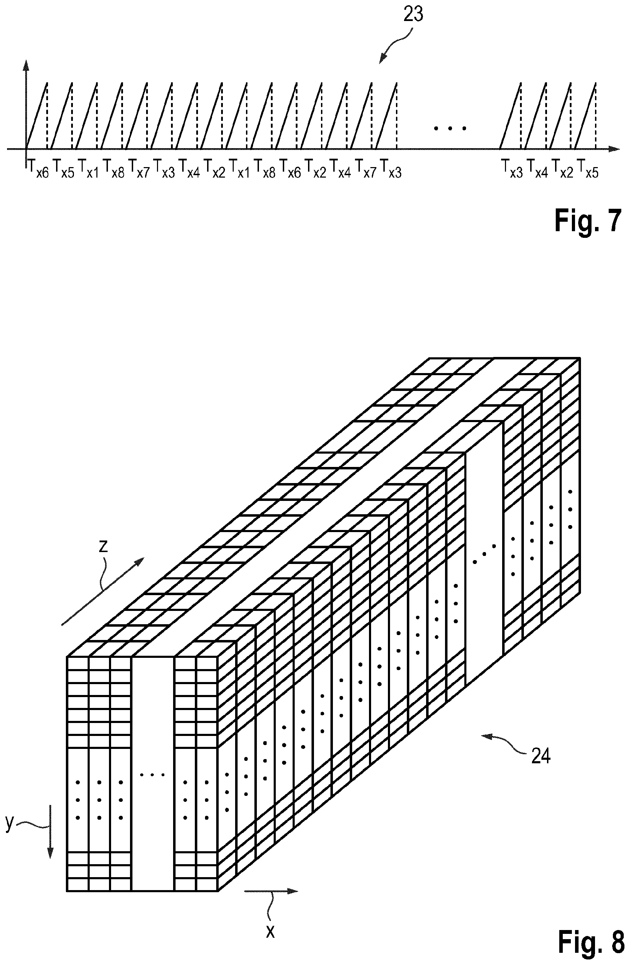

Fig. 7 shows exemplary a MIMO chirp sequence 23. Here may be chirps of equal transmit antenna received during one frame. The MIMO chirp sequence 23 contains the received reflected receive signals 10 of equal transmitting antennas 9. For example the signals are sorted based of the respective antenna index $T_{x1}$ to $T_{x8}$. In other words the received signals 16 are sorted on the basis of the transmitting antennas 9 on which the individual received signals 16 are based.

Based on the description of Fig. 7 the following Fig. 8 shows an exemplary data structure 24, which may contains the information of the MIMO chirp sequence 23. In x direction and z direction may be applied the respective antenna index $T_{x1}$ to $T_{x8}$. In y direction may be applied respective range indexes.

In order to determine at least one target information of the radar target 15 for example the existing date set according to the number of transmitting antennas 9 may be duplicate. Afterwards these received date that has been sent from the same transmitting antenna may be keep. Then all others may be delete and the memory location of deleted date sets may be set to zero. Along a pulse direction a fourier transformation may be apply. Afterwards the dataset of each individual transmitting antenna may be averaged. The average may be done along receiving antennas 10.

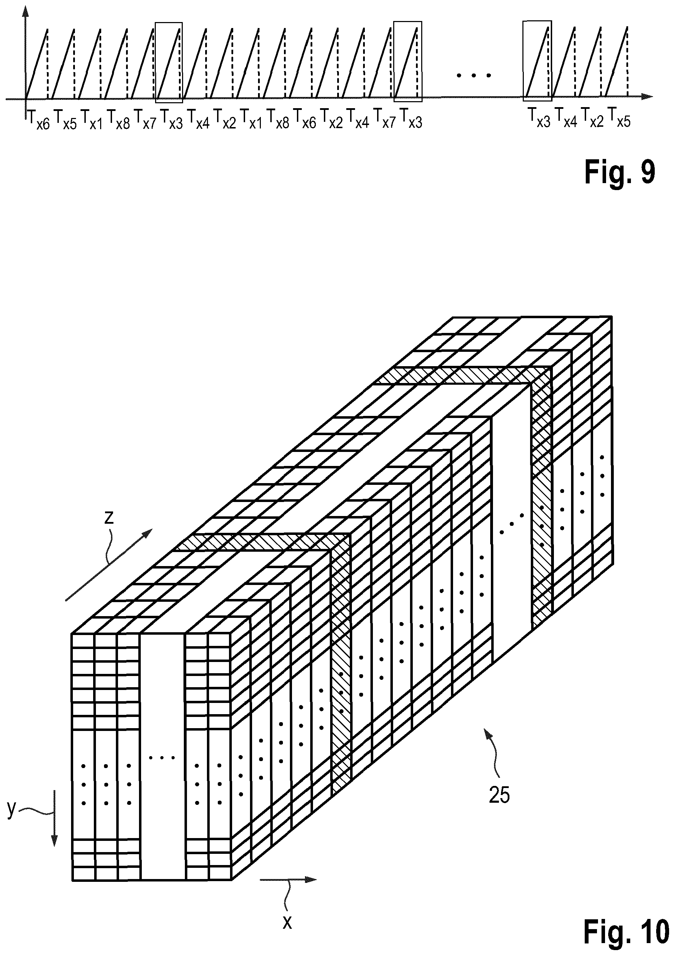

In Fig. 9 the MIMO chirp sequence 23 is shows again. But here the receive signals bases on antenna index $T_{x3}$ are selected and marked.

Fig. 10 shows according to the MIMO chirp sequence 23 a data structure 25, which is based on the antenna index $T_{x3}$ for example.

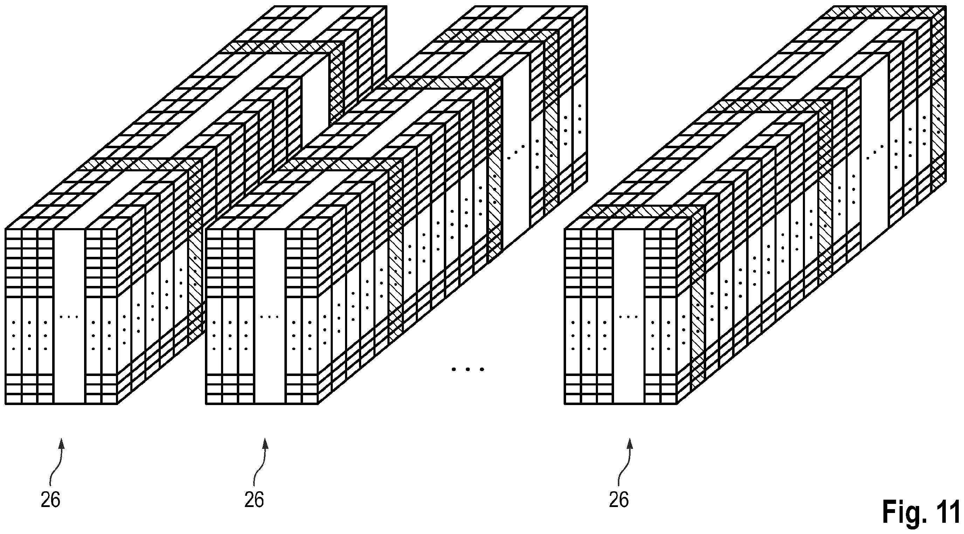

In other words may be generate for each transmitting antenna 9 an individual data structure 26 (see Fig. 11) based on the sorted received signals 16 , wherein each data structure 26 may comprise the received signals 16 which based on the transmitting antenna on which the individual data structure 26 is generated.

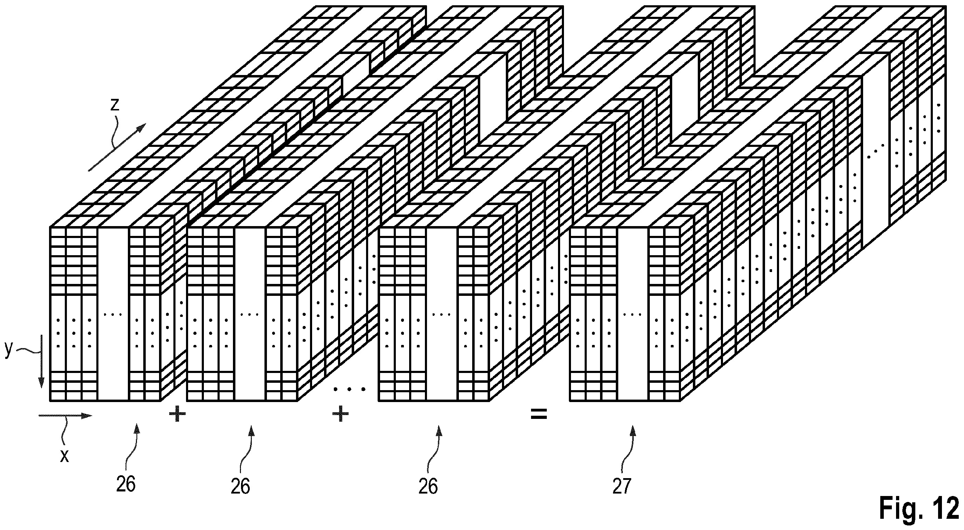

Especially at each data structure 26 a zero-padding-method may be applied, wherein at memory positions of a respective data structure 26, which characterizes a transmission time at which a other transmitting antenna than the transmitting antenna relating to the respective data structure has transmitted, is filled with zeros. Furthermore at each data structure 26 a fast fourier transformation may be applied based along pulse direction of the received signals 10 of each data structure 26. Thus for each generated data structure 26 an individual range-Doppler-map may be generated based on the individual received signals 16 of each data structure 26. This is exemplary shows in Fig. 12. In Fig. 12 may be show in z direction a range index. For example a target detection of the radar target 15 may be apply based on a range-Doppler-map of each data structure 26. As a result a combined data structure 27 may be generated.

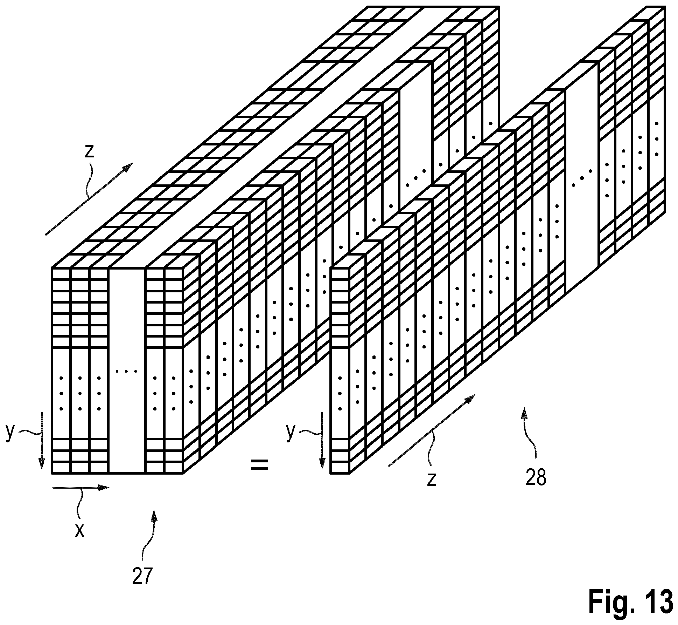

Fig. 13 shows for example of a last processing step. Here all samples of all received antennas may be average. In other words, average the same sample index of each antenna. Optionally an averaged data structure 28 is generated based on the averaged range-Doppler-maps of the data structures 26 or the data structure 28, wherein the averaged data structure 28 will be considered at the determining of the target information of the radar target 15.

In x direction may be applied the respective antenna index. In y direction may be applied respective range indexes and in z direction a respective Doppler index may be applied.

Thereby the range-Doppler-maps of the date structures 26 may be averaged, and the target information of the radar target 15 may be determined based of the averaged range-Doppler-map of the date structures 26.

The received signals 16 of each data structure 26 may be incoherent combined for determining the range-Doppler-map of each data structure 26.

Particularly for each range-Doppler-map of the data structures 26 an individual target signal relating to the radar target may be generated based on each range-Doppler-map.

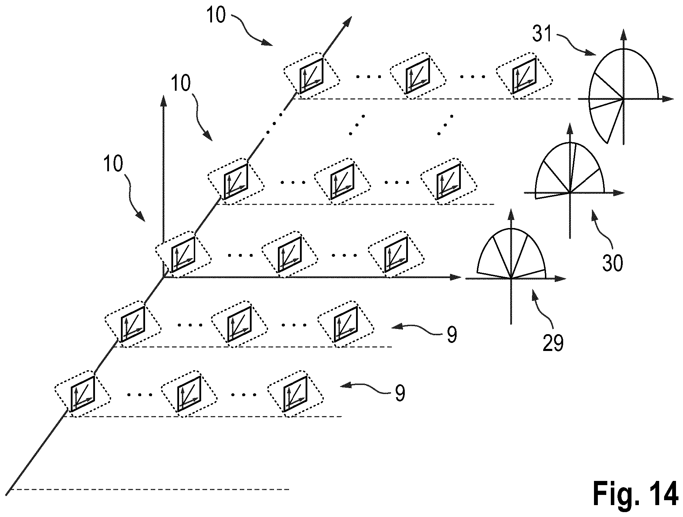

Fig. 14 shows an exemplary result of the previous embodiments. The starting phase 29, 30, 31 of each receiving process may be incoherent increase. Especially just receive echo signals from the same transmission antenna. Then put them in a separate date structure 26 an set missing snapshots to zero.

In particular a range-Doppler-spectrum with the preceding signal processing contains a signal-to-noise ratio, which could be signifimaytly improved.

In the following Figures a brief description how to estimate an angular is shown.

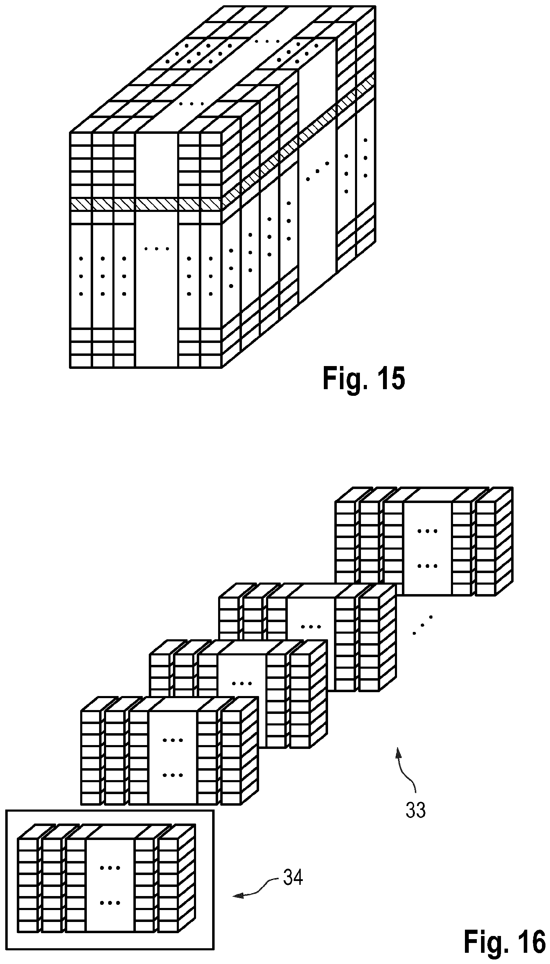

Fig. 15 shows an exemplary range matrix 32, which may be a data structure 26. Based on the range matrix 32 may be estimate a target signal of a radar target. Particularly this target signal may be calculated with the following equation:

$$S(u_c, m, k, l) = S(u_c) \underbrace{\exp\left(\frac{2\pi}{\lambda}j2v_tT_{RRI}m\right)}_{\text{Doppler dependent phase}}$$

$$\underbrace{\exp\left(\frac{2\pi}{\lambda}jd_t(k,l)\right)}_{\text{DoA dependent phase}}$$

This equation contains a Doppler dependent phase and a direction of arrival (DoA) dependent phase.

In signal processing, direction of arrival denotes the direction from which usually a propagating wave arrives at a point, where usually a set of sensors are located.

Particularly for each range-Doppler-map or the range matrix 32 a Doppler compensation may be applied based on a Doppler compensation filter which is based on individual target signal. Particularly this filter may be describe with the following equation:

$$S_{DP}(m, o) = \exp\left(-\frac{2\pi}{\lambda}j\,2v_t(o)T_{RRI}m\right)$$

The relationship chirp index Doppler velocity may be calculated with the following equation:

$$v_t(o) = \frac{c_0}{2f_0}\frac{o}{LT_{RRI}}$$

Based on the Doppler compensation filter a Doppler compensation of the target signal may be done. This may be describe with the following equation:

8

$$S(k,l) = S(u_c, m, k, l)\, S_{DP}(m, o)$$

Finally a aperture snapshot may be calculated with the following equation:

$$S(k,l) = S(u_c) \exp\left(\frac{2\pi}{\lambda} j d_t(k,l)\right)$$

With an optionally derivation of the aperture snapshot may be estimate an angular.

Fig. 16 shows for example a number of different range matrices 33 of individual MIMO sequences.

Here a redistribution of the range gate with the expected target angle may be put into a target data structure according to the array manifest of virtual antenna elements. Maybe a transfer of the identified range gates from each chirp and/or into each transmitter-receiver combination.

A rang Doppler matrix 34 may be estimate based on the aperture snapshot adjusted by Doppler phase term.

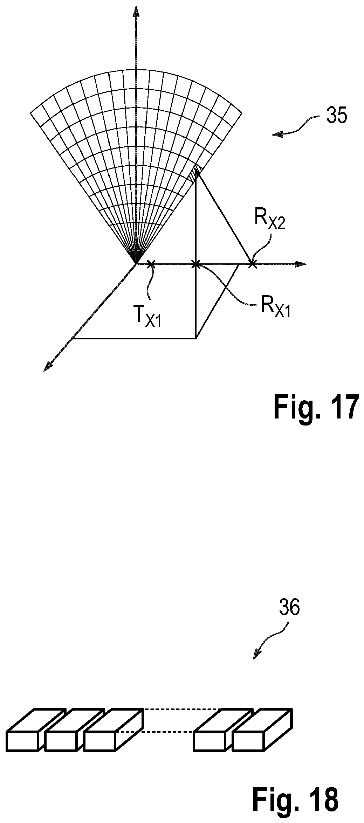

Fig. 17 shows a schematic field of view 35 of an antenna. Therefor a hypothesis model $p_H$ may be used to estimate an angle.

The hypothesis model $p_H$ may be calculated as following:

$$\vec{p}_H = r_H \begin{pmatrix} \cos\theta_H \\ \sin\theta_H \\ 0 \end{pmatrix}$$

Here $r_H$ may be constant and $\theta_H$ may be -60°

A construction of an aperture hypothesis 36 is shown in Fig. 18. With this aperture hypothesis 36 a description of an spatial signal as a function of range and angle of incidence may be done.

With the following equation a pseudo target two way path distance may be calculated.

$$d(k,l) = \left\| \vec{p}_{T_{x,k}} - \vec{p}_H \right\|_2 + \left\| \vec{p}_{R_{x,l}} - \vec{p}_H \right\|_2$$

Furthermore a direction of arrival hypothesis may be estimate with the following equation:

$$s(k,l) = \exp\left(-\frac{2\pi}{\lambda} j d(k,l)\right)$$

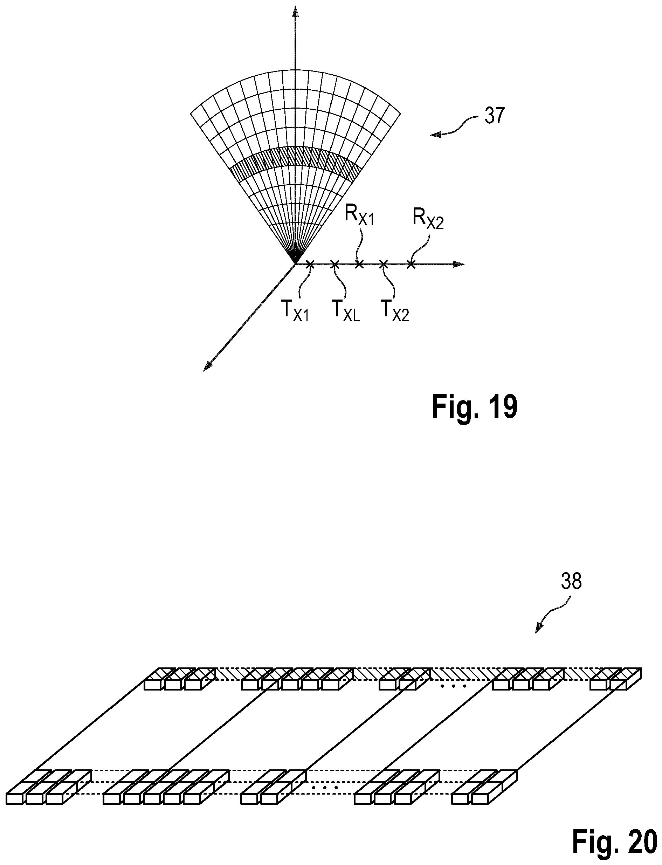

In Fig. 19 is expended hypothesis model 37 shown. The description of Fig. 17 are to be applied here in any case.

In Fig. 20 a aperture hypothesis 38 based on the expended hypothesis model 37 is shown. The description and the calculations of Fig. 18 are to be applied here in any case.

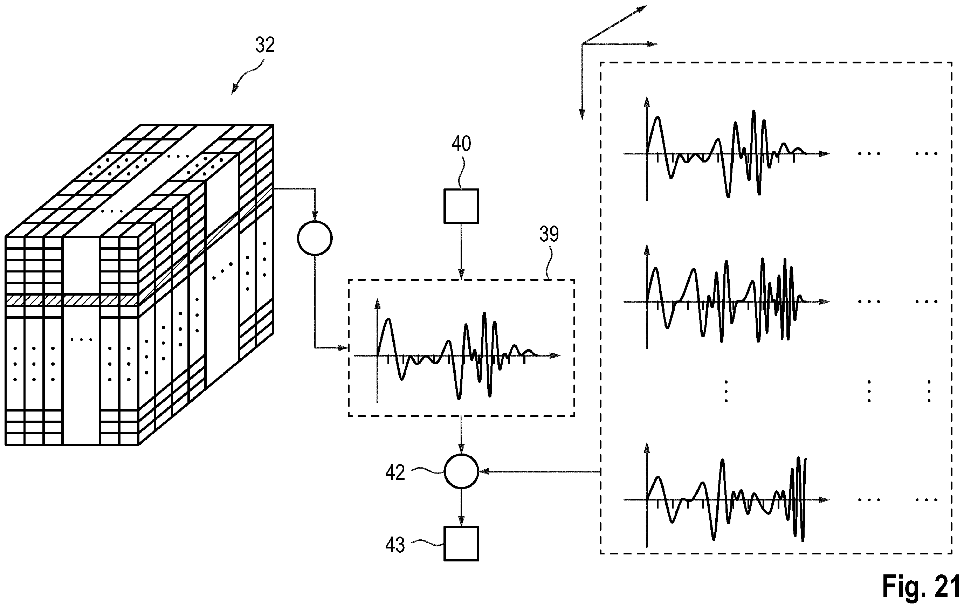

Fig. 21 shows an exemplary control flow how to estimated angle in azimuth and elevation.

As a first input parameter 39 a Doppler compensation of the range matrix 32 may be provided. As a second input parameter 40 the Doppler adjusted aperture signal may be provided. As an exemplary third input parameter 41 an aperture hypothesis may be provided. Based on the input parameters 39, 40, 41 an angle in azimuth and elevation may be estimate with an orthogonal matching pursuit algorithm 42. The angle in azimuth and elevation may be provided as a target information 43 of the radar target 15. This target information 43 may be determined based on the orthogonal matching pursuit algorithm 42 or a compressive sensing algorithm. Particularly may be provided with the target information 43 an angle and/or a direction to the radar target 15.

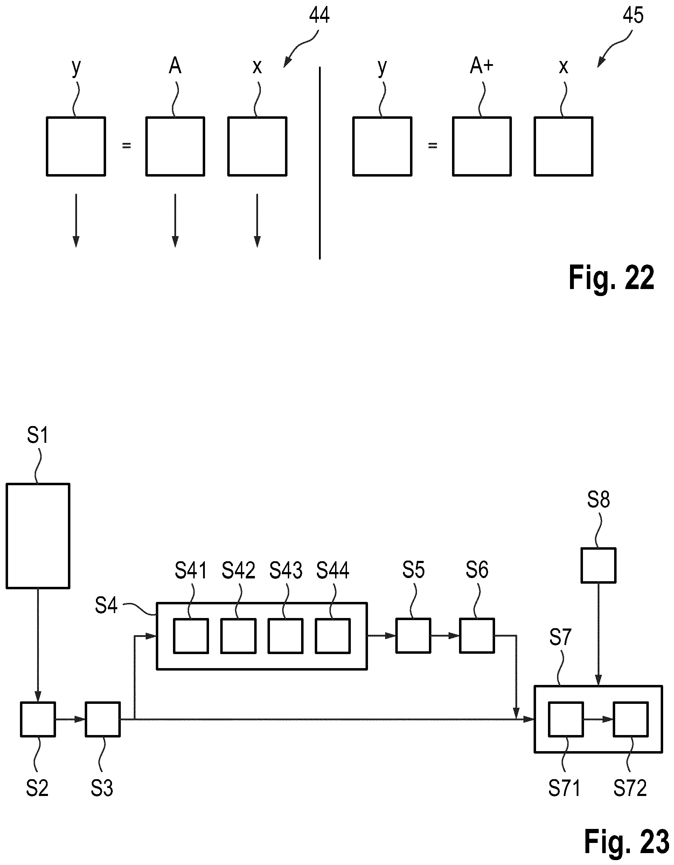

Fig. 22 shows schematic a definition of compressed sensing for angel estimation.

Compressed sensing is based on the principle that, through optimization, the sparsity of a signal may be exploited to recover it from far fewer samples than required by the Nyquist-Shannon-sampling-theorem.

Assume a signal is modelled by an underdetermined linear system. Therefore a compressed sensing schema 44 is shown. A original signal X is combined with a sensing matrix A to estimate a compressed signal Y. With a reconstruction schema 45 the original signal X may be reconstructed. For X maybe exists an infinite number of solution. To find a solution one must impose extra contraints and conditions. In Compressed sensing one adds the contraint of sparsity. Here only solutions which have a small number of nonzero coefficients may be allow.

Fig. 23 shows schematic a process flow how to the Calculation of a direction of arrival may be done.

In an optionally step S1 an input may be calculated based on a two way target distance. For example the input based on 256 ADC-samples multiple with six receiving antennas multiple with eight transmitting antennas multiple with 32 MIMO-cycles.

In an optionally step S2 a Hamm windowing range may be calculated. This may takes 62 microseconds.

In an optionally step S3 a range fast Fourier transformation (FFT) may be performed. This may takes 400 microseconds.

In an optionally step S4 an incoherent Doppler processing may be performed. The step S4 may be contains a step S41, in which a Hamm windowing Doppler may be performed. The step S4 further may be contains a step S42, in which a sample restructuring may be performed. Step S41 and step S42 may takes together 524 microseconds. The step S4 further may be contains a step S43, in which a Doppler FFT may be performed. Step S43 may takes 60 microseconds. The step S4 further may be contains a step S44, in which an incoherent range Doppler sum up may be performed. Step S44 may takes 285 microseconds.

In an optionally step S5 a CFAR computing may be performed.

In an optionally step S6 a peak detection may be performed.

In an optionally step S7 an direction of arrival (DoA) estimation may be performed. The step S7 may be contains a step S71, in which a Doppler compensation may be performed. The step S71 may takes 9 microseconds. The step S7 further may be contains a step S72, in which a OMP computation may be performed.

Step S1 to step S72 may be done or calculate online.

In an optionally step S8 a sensing matrix aperture hypothesis may be performed. This may take 251 microseconds and this may be provided for step S7. Step S8 may be done offline.

The inventive method comprises in other words:

i. Select received chirps of equal transmit antenna during one frame

ii. FFT of sorted data structure

iii. Incoherent integration of individual received antenna signals for the determination of the Doppler frequencies

iv. Indication for target identification in each range-Doppler cell

v. Local aperture signal (snapshot) indexed by range Doppler cell

vi. Doppler compensation of local aperture signal as input for orthogonal matching pursuit algorithm (or other compressive sensing algorithms)

vii. Calculation of angular target information

**List of reference characters**

| 1 | reception signal |
|---|---|
| 2 | uniform linear antennas |
| 3 | radar system |
| 4 | waveform generator |
| 5 | optical signal |
| 6 | transmitter |
| 7 | receiver |
| 8 | antenna array |
| 9 | transmitting antennas |
| 10 | receiving antennas |
| 11 | low noise amplifier |
| 12 | inphase channel |
| 13 | radar signal |
| 14 | environment |
| 15 | radar target |
| 16 | received signals |
| 17 | phase shift |
| 18 | data structure |
| 19 | data structure |
| 20 | data structure |
| 21 | motor vehicle |

| 22 | phase shifts |
| 23 | MIMO chirp sequence |
| 24 | data structure |
| 25 | data structure |
| 26 | data structure |
| 27 | combined data structure |
| 28 | averaged data structure |
| 29 | starting phase |
| 30 | starting phase |
| 31 | starting phase |
| 32 | range matrix |
| 33 | different range matrices |
| 34 | range Doppler matrix |
| 35 | field of view |
| 36 | aperture hypothesis |
| 37 | expended hypothesis model |
| 38 | aperture hypothesis |
| 39 | input parameter |
| 40 | input parameter |
| 41 | input parameter |
| 42 | orthogonal matching pursuit algorithm |
| 43 | target information |
| 44 | compressed sensing schema |
| 45 | reconstruction schema |
| 46 | electronic evaluation unit |
| S1 - S8 | steps |
| $T_{x1}$ to $T_{x8}$ | antenna index |

**Claims**

1.  A method for determining at least one target information (43) of at least one radar target (15) of a radar system (3), wherein the radar system (3) comprising at least one antenna array (8), which comprising multiple transmitting antennas (9) and multiple receiving antennas (10),
    **characterized in that**

    - each transmitting antenna of the multiple transmitting antennas (9) transmits a radar signal (13) into an environment (14) of the radar system (3) in successive transmission operation,
    - after each transmitting operation, at least some of the plurality of receiving antennas (10) receive reflected received signals (16) from the radar target (15) in the environment (14) based on the transmitted radar signal (13) of the respective transmitting operation,
    - the received signals (16) are sorted on the basis of the transmitting antennas (9) on which the individual received signals (16) are based,
    - for each transmitting antenna (9) a data structure (26) is generated based on the sorted received signals (16), wherein each data structure (26) comprised the received signals (16) which based on the transmitting antenna (9) on which the individual data structure (26) is generated,
    - for each generated data structure (26) an individual range-Doppler-map is generated based on the individual received signals (16) of each data structure (26),
    - the range-Doppler-maps of the date structures (26) are averaged, and
    - the target information (43) of the radar target (15) is determined based of the averaged range-Doppler-map of the date structures (26).

2.  The method according to claim 1,
    **characterized in that**
    for each transmission operation the one of the plurality of the transmitting antennas (9) which transmits a radar signal (13) is defined in any order, in particular the one of the plurality of the transmitting antennas (9) which transmits a radar signal (13) in each transmission operation is randomized default.

3.  The Method according to claim 1 or 2,

**characterized in that**
the received signals (16) which are received after each transmission operation are mixed with the radar signal (13) of the transmitting antenna (9) of the individual transmission operation.

4. The method according to any one of the preceding claims,
**characterized in that**
at each data structure (26) a zero-padding-method is applied, wherein at memory positions of a respective data structure (26), which characterizes a transmission time at which a other transmitting antenna than the transmitting antenna (9) relating to the respective data structure (26) has transmitted, is filled with zeros

5. The method according to any one of the preceding claims,
**characterized in that**
at each data structure (26) a fast fourier transformation is applied based along pulse direction of the received signals (16) of each data structure (26).

6. The method according to any one of the preceding claims,
**characterized in that**
an averaged data structure (28) is generated based on the averaged range-Doppler-maps of the data structures (26), wherein the averaged data structure (28) will be considered at the determining of the target information (43) of the radar target (15).

7. The method according to any one of the preceding claims,
**characterized in that**
a target detection of the radar target (15) is applied based on a range-Doppler-map of each data structure (26).

8. The method according to any one of the preceding claims,
**characterized in that**
the received signals (16) of each data structure (26) are incoherent combined for determining the range-Doppler-map of each data structure (26).

9. The method according to any one of the preceding claims,
**characterized in that**
for each range-Doppler-map of the data structures (26) an individual target signal relating to the radar target (15) is generated based on each range-Doppler-map.

10. The method according to claim 9,
**characterized in that**
for each range-Doppler-map a Doppler compensation is applied based on a Doppler compensation filter which is based on individual target signal.

11. The method according to any one of the preceding claims,
**characterized in that**
the target information of the radar target is determined based on an orthogonal matching pursuit algorithm (42) or a compressive sensing algorithm.

12. The method according to any one of the preceding claims,
**characterized in that**
with the target information (43) an angle and/or a direction to the radar target (15) is provided.

13. Radar system (3) comprising at least one antenna array (8), which comprised multiple transmitting antennas (9) and multiple receiving antennas (10), and an electronic evaluation unit (46), wherein the radar system (3) is designed to carry out a method according to one of the preceding claims.

14. Motor vehicle (21) comprising a radar system (3) according to claim 13.

15. Motor vehicle (21) according to claim 14, wherein
the transmitted antennas (9) and the receiving antennas (10) of the antenna array (8) are arranged at a distance from each other on the motor vehicle (21).

Fig. 1

Fig. 2

Fig. 3

Fig. 4

Fig. 5

Fig. 6

Fig. 7

Fig. 8

$T_{x6}$ $T_{x5}$ $T_{x1}$ $T_{x8}$ $T_{x7}$ $T_{x3}$ $T_{x4}$ $T_{x2}$ $T_{x1}$ $T_{x8}$ $T_{x6}$ $T_{x2}$ $T_{x4}$ $T_{x7}$ $T_{x3}$     $T_{x3}$ $T_{x4}$ $T_{x2}$ $T_{x5}$

Fig. 9

z

y

x

25

Fig. 10

Fig. 11

26

26

26

EP 4 624 978 A1

Fig. 12

Fig. 13

Fig. 14

**Fig. 15**

33

34

**Fig. 16**

35

$R_{X2}$

$R_{X1}$

$T_{X1}$

# Fig. 17

36

# Fig. 18

**Fig. 19**

**Fig. 20**

**Fig. 21**

39

40

42

43

32

Fig. 22

Fig. 23

**EP 4 624 978 A1**

Europäisches
Patentamt

European
Patent Office

Office européen
des brevets

# EUROPEAN SEARCH REPORT

**Application Number**

EP 24 16 6870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2022/221570 A1 (ZHU JINTAI [CN] ET AL)<br>14 July 2022 (2022-07-14)<br>* figures 1b, 2b, 11 *<br>* paragraph [0002] - paragraph [0005] *<br>* paragraph [0054] *<br>* paragraph [0064] *<br>* paragraph [0103] - paragraph [0109] *<br>* paragraph [0114] *<br>* paragraph [0121] *<br>* paragraph [0144] *<br>* paragraph [0165] *<br>* paragraph [0170] - paragraph [0173] *<br>* paragraph [0204] - paragraph [0205] *<br>----- | 1-9,<br>11-15<br><br>10 | INV.<br>G01S7/35<br>G01S13/42<br>G01S13/58<br>G01S13/931 |
| Y | US 11 867 792 B2 (SAMSUNG ELECTRONICS CO<br>LTD [KR]) 9 January 2024 (2024-01-09)<br>* figure 6 *<br>* column 2, line 42 - page 1, line 65 *<br>* column 13, line 9 - page 7, column 14,<br>line 55 *<br>----- | 10 | |
| A | EP 4 187 275 A1 (NXP USA INC [US])<br>31 May 2023 (2023-05-31)<br>* paragraph [0013] *<br>* paragraph [0038] - paragraph [0040] *<br>* figures 5,17 *<br>----- | 1-15 | TECHNICAL FIELDS SEARCHED (IPC)<br><br>G01S |

The present search report has been drawn up for all claims

| Place of search | Date of completion of the search | Examiner |
|---|---|---|
| Munich | 30 August 2024 | Töpfer, Nils-Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 6870

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | Publication date | Patent family member(s) | Publication date |
|---|---|---|---|
| US 2022221570 A1 | 14-07-2022 | CN 113287036 A | 20-08-2021 |
| | | US 2022221570 A1 | 14-07-2022 |
| | | WO 2021062750 A1 | 08-04-2021 |
| US 11867792 B2 | 09-01-2024 | CN 113253252 A | 13-08-2021 |
| | | EP 3865905 A1 | 18-08-2021 |
| | | KR 20210101957 A | 19-08-2021 |
| | | US 2021247508 A1 | 12-08-2021 |
| EP 4187275 A1 | 31-05-2023 | EP 4187275 A1 | 31-05-2023 |
| | | US 2023168367 A1 | 01-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4137840 A1
- EP 3588128 A

- US 20220260699 A1